Europäisches Patentamt

European Patent Office

Office européen des brevets

(11) Publication number: **0 145 933**
**B1**

(12) **EUROPEAN PATENT SPECIFICATION**

(45) Date of publication of patent specification: **04.10.89**

(21) Application number: **84113413.3**

(22) Date of filing: **07.11.84**

(51) Int. Cl.⁴: **B 22 D 11/06, B 23 K 35/28, B 23 K 1/04, C 22 C 21/02**

(54) **Low temperature aluminum based brazing alloys.**

(30) Priority: **06.12.83 US 558655**

(43) Date of publication of application:
**26.06.85 Bulletin 85/26**

(45) Publication of the grant of the patent:
**04.10.89 Bulletin 89/40**

(84) Designated Contracting States:
**DE FR GB**

(56) References cited:
**US-A-3 853 547**
**US-A-3 898 053**
**US-A-3 917 151**
**US-A-4 142 571**
**US-A-4 143 802**
**US-A-4 331 739**

**Patent Abstracts of Japan, Unexamined applications, C field, vol. 4, no. 73, May 28 1980, page 83 C 12**

**Chemical Abstracts, vol. 99, 1983, page 271, abstract-no. 144437q**

(73) Proprietor: **ALLIED CORPORATION**
**Columbia Road and Park Avenue P.O. Box 2245R (Law Dept.)**
**Morristown New Jersey 07960 (US)**

(72) Inventor: **Datta, Amitava**
**c/o Allied Corporation P.O. Box 2245R**
**Morristown New Jersey 07960 (US)**
Inventor: **Adam, Colin McLean**
**c/o Allied Corporation P.O. Box 2245R**
**Morristown New Jersey 07960 (US)**
Inventor: **Bye, Richard Lister, Jr.**
**c/o Allied Corporation P.O. Box 2245R**
**Morristown New Jersey 07960 (US)**
Inventor: **Bose, Debasis**
**c/o Allied Corporation P.O. Box 2245R**
**Morristown New Jersey 07960 (US)**
Inventor: **Das, Santosh Kumar**
**c/o Allied Corporation P.O. Box 2245R**
**Morristown New Jersey 07960 (US)**

(74) Representative: **Weber, Dieter, Dr. et al**
**Willrath Weber und Seiffert Postfach 6145**
**Gustav-Freytag-Strasse 25**
**D-6200 Wiesbaden 1 (DE)**

(56) References cited:
Chemical Abstracts, vol. 97, 1982, page 252,
abstract-no. 202041c

Chemical Abstracts, vol. 96, 1982, page 278,
abstract-no. 108604w

Chemical Abstracts, vol. 94, 1981, page 258,
abstract-no. 144087x

Chemical Abstracts, vol. 93, 1980, page 254,
abstract-no. 12177w

Chemical Abstracts, vol. 91, 1979, page 244,
abstract-no. 144757d

Chemical Abstracts, vol. 91, 1979, page 275,
abstract-no. 61523y

Chemical Abstracts, vol. 90, 1979, page 283,
abstract-no. 126149g

Chemical Abstracts, vol. 90, 1979, page 273,
abstract-no. 27760t

Chemical Abstracts, vol. 87, 1977, page 210,
abstract-no. 205263f

Chemical Abstracts, vol. 87, 1977, page 225,
abstract-no. 188175j

Chemical Abstracts, vol. 85, 1976, page 244,
abstract-no. 181327k

Chemical Abstracts, vol. 79, 1973, page 152,
abstract-no. 107548p

Chemical Abstracts, vol.76, 1972, page 263,
abstract-no. 157460s

# EP 0 145 933 B1

**Description**

This invention relates to aluminum based metal foils and more particularly to a ductile brazing foil useful for brazing metal articles such as those of aluminum and aluminum alloys, an apparatus for making them and the use of such foils for joining together two or more metal parts.

Brazing is a process of joining metal parts, often of dissimilar composition, to each other. Typically, a filler metal that has a melting point lower than that of the metal parts to be joined together is interposed between the metal parts to form an assembly. The assembly is then heated to a temperature sufficient to melt the filler metal. The molten filler metal reacts with the parts to be joined so that when cooled a strong joint is formed.

Filler metals used are commonly in powder, wire, or foil form depending on the alloy composition and the specific application. The filler metals are often used in conjunction with fluxes and the process may be carried out in inert atmosphere or vacuum, again depending on the filler metal composition and the specific application. The foil form of filler metal provides the advantage of preplacing a controlled amount of filler metal in the joint area, thus permitting brazing of complex shapes with minimum rejection.

Polycrystalline brazing compositions containing about 0.02 to 0.20 percent by weight bismuth, about 7 to 14 percent by weight silicon and about 0.2 to 2 percent by weight magnesium are used preferably as a cladding layer on a magnesium-containing aluminum base core alloy according to the US—A—3 898 053.

Filler metals for brazing of aluminum and aluminum alloys are aluminum-silicon alloys containing 7 to 13 wt. % silicon and are designated AWS BAlSi. Liquidus, solidus and brazing temperatures of these alloys decrease with increasing silicon content up to about 12.5 wt. %. It has been proposed that these alloys contain up to 3 wt. % Mg for fluxless furnace brazing. However, alloys containing high silicon and magnesium content are extremely difficult to make in foil form because they are brittle and do not respond well to the multiple rolling and annealing cycles necessary to produce foil from ingots or slabs. Filler metal foils are currently limited to relatively low silicon contents of less than 10 wt. % with magnesium contents of up to 1 wt. %, or to very low magnesium content (0.5 wt. %) with more desirable silicon contents. In any case, because of the inherent limitations in the casting and rolling processes, silicon containing particle, hereinafter called silicon particle, size is limited to a minimum of approximately 1 μm and is more typically of the order of 5 μm. Brazing foils with uniformly dispersed silicon particles of less than 1 μm are more desirable than those with large particles. In the commercially available brazing foils there tends to be a relatively heavy oxide film present on the surface which is an impediment to the brazing process.

An alternative to filler metal foil is known as brazing sheet. Brazing sheet consists of a brazeable aluminum alloy roll bonded or clad on one or both sides with a brazing alloy of the desired composition.

The limitations in the use of brazing sheet include the increased costs involved in the manufacturing of it. Additionally, there is a minimum thickness of approximately 0.635 mm (0.025 inch) for such sheets. The relatively thick sheets, in turn, result in silicon diffusion into the core, which limits the amount of filler metal available for joint formation.

US—A—4 142 571 discloses an apparatus and teaches a method for making continuous polycrystalline or amorphous strips of considerable width (greater than 7 mm) directly from the melt by forcing molten metal onto the surface of a moving chill body under pressure through a slotted nozzle located in close proximity to the surface of the chill body. There may be provided a gas supply means to direct an inert gas against the chill body ahead of the nozzle. Because of the density, fluidity, and strong tendency for oxidation of aluminum alloys, it has been found that it is very difficult to maintain melt flow uniformity for long times and therefore produce large quantities of aluminum alloy ribbon suitable for brazing applications with the method as disclosed by the US—A—4 142 571. There is, therefore, a need for an improved process that would make the production of aluminum brazing foils in commercial quantities possible.

There remains a need in the art for an aluminum brazing alloy with a high silicon content and high magnesium content, the silicon particles being finely dispersed, for low brazing temperatures in fluxless brazing processes. It would be particularly desirable if such aluminum brazing alloy were available in foil form with a minimum oxide film thickness.

The present invention provides a rapidly solidified metal foil useful as ductile ribbons having a form and composition particularly suited for use as brazing foils in fluxless brazing processes.

The foil of an alloy according to the invention containing about 10 to 13 wt. % Si, up to 3 wt. % Mg, up to 4 wt. % copper, up to 0.2 wt. % of at least one element selected from the group consisting of bismuth, strontium, lithium, scandium, yttrium, calcium, phosphorus and sodium, up to 2 wt. % of at least one of the rare earth elements, the balance being aluminum and incidental impurities, is characterized in that the average silicon particle size is less than 1 μm obtained by quenching a melt of said alloy at a rate of at least $10^5$°C/sec.

The addition of silicon depresses the melting point of the alloy, while the addition of magnesium enhances wetting and promotes good filler metal flow in fluxless brazing processes. The other elements named act in the same manner as magnesium does in influencing the filler metal flow and, in addition, refine the microstructure of the brazed joint thereby improving the ductility and mechanical properties of the joint. The microstructure obtained by the rapid solidification rates contains very fine and uniformly distributed silicon particles. Said foil is suitable for use in brazing applications, especially in fluxless brazing

3

processes, in its as-cast requiring no subsequent processing other than cutting into a desired preform shape. It has preferably a thickness ranging from about 25 µm to 100 µm. The foil is preferably ductile. Suitably, it has a surface oxide film of thickness less than 0.01 µm.

Preferably, the foil contains 0.5 to 2.5 wt. % Mg. More preferably, it contains 12 to 13 wt. % Si, 0.5 to 2.5 wt. % Mg and up to 0.05 wt. % of at least one of the elements Bi and Sr.

The ductile brazing foil of the invention is fabricated by a process which comprises forming a melt of the desired composition and quenching the melt on a moving chill body at a rate of at least $10^5$ °C/sec. That process further comprises the provision of a means to protect the melt puddle from excessive oxidation and physical disturbance by the air boundary layer carried with the moving substrate. Said protection is provided by a shrouding apparatus which serves the dual purpose of containing a reducing gas, such as CO or an inert gas, around the nozzle while excluding extraneous wind currents which may disturb the melt puddle.

Another aspect of the invention is an apparatus for fabricating a continuous metal foil composed of a low density, readily oxidizable aluminum based alloy comprising a slotted nozzle, a moving chill substrate and a gas supply means, which apparatus is characterized in that there are provided scraping means located upstream of said slotted nozzle (21) and being adapted to ride on said substrate and remove the gaseous boundary layer associated therewith, and shielding means located proximate to said nozzle and configured to form a semi-enclosed chamber around said nozzle and said substrate, said chamber having a bottom wall comprising said substrate, a top wall comprising said nozzle, side walls comprising a plurality of side shields and a back wall comprising said scraping means, said shielding means being operative to direct and confine said replacement gas in the vicinity of said nozzle, and that the gas supply means disposed between said scraping means and said nozzle for introducing a replacement gas behind said nozzle so that said replacement gas rides on and is carried with said substrate to said nozzle.

Further, there is provided in accordance with the invention, an improved process for joining two or more metal parts by brazing. The process comprises interposing a metal foil between the metal parts to form an assembly, the foil metal having a melting temperature less than that of any of the metal parts, heating the assembly in a vacuum of $1\times10^{-3}$ Torr or lower or in a reducing atmosphere to at least the melting temperature of the filler metal, and cooling the assembly.

The improvement comprises employing, as the metal foil, a ductile aluminum brazing foil that has the composition and structure given above. The foils of the invention contain a distribution of silicon particles that are significantly smaller than those in currently available brazing foil for this purpose. Furthermore, the thickness of the oxide layer in the foils of the present invention is less than in the commercially available brazing foils, thus making the brazing process easier.

The filler metal foil is easily fabricable with this invention as ductile ribbon that can be used in the as-cast form. Advantageously, the aluminum based metal foil can be stamped into complex shapes to provide braze preforms.

Advantageously, the homogeneous, ductile foil of the invention can be placed in the joint prior to the brazing operation.

The invention will be more fully understood and further advantages will become apparent when reference is made to the following detailed description and the accompanying drawings, in which:

Fig. 1 is a side cross section illustrating the relationship between the substrate, scraper, the inert or reducing gas inlet, and the nozzle through which metal is deposited on the moving chill surface;

Fig. 2 is a perspective view illustrating a manner of arrangement of the substrate scraper and the side shields which arrangement provides a semi-enclosed chamber that directs and confines the inert or reducing gas in the vicinity of the nozzle opening;

Fig. 3 is a perspective view, taken from the side opposite to that shown in Fig. 2, illustrating the substrate scraper and side shields arrangement;

Fig. 4 is an optical micrograph of a cross section of an as-cast 85 wt. % Al—13 wt. % Si—2 wt. % Mg foil; and

Fig. 5 is an optical micrograph of a cross section of a commercial alloy foil having AWS designation 4004, the composition of the alloy being 90 wt. % Al—9.5 wt. % Si—0.5 wt. % Mg.

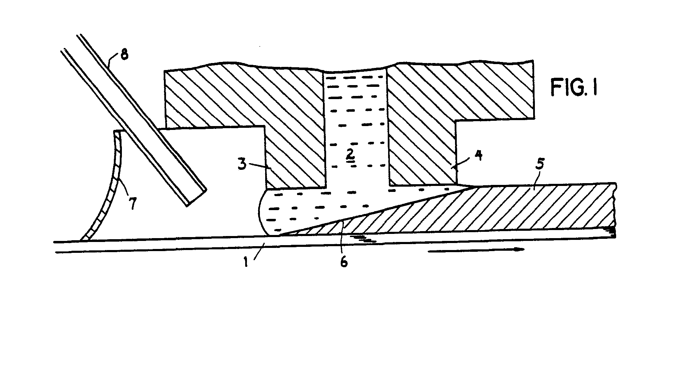

Fig. 1 shows a partial cross sectional side view illustrating the method by which the brazing foils of the present invention are cast. As shown in Fig. 1, molten metal 2 of the desired composition is forced under pressure through a slotted nozzle defined by a first lip 3 and a second lip 4 onto the surface of a chill body 1 which is held in close proximity to the nozzle and moves in the direction indicated by the arrow. A scraping means including scraper 7 is located in contact with the chill substrate and an inert or reducing gas is introduced by a gas supply means through a gas inlet tube 8.

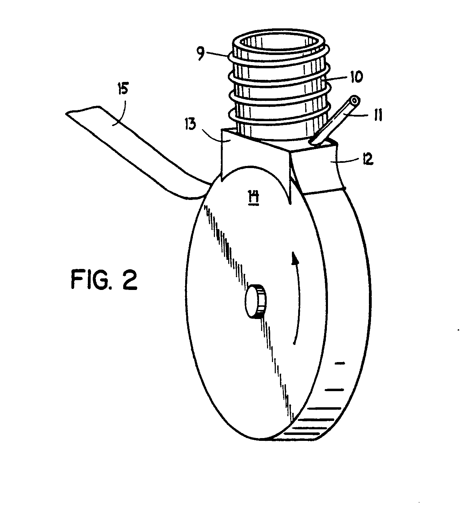

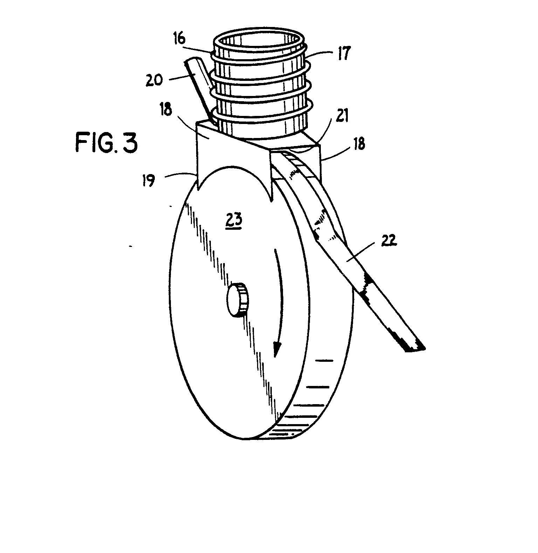

Figs. 2 and 3 are simplified perspective views from two different angles showing, with reference to Fig. 3 how side shields 18 are used in conjunction with the scraper 19 and the gas inlet tube 20, to provide a semi-enclosed chamber around the nozzle 21.

It has been found that the preferred protective gas is carbon monoxide, although other gases such as helium, nitrogen or argon can be used. The advantage of using CO is that it burns, combining with oxygen present around the nozzle to produce hot $CO_2$. The process reduces the oxygen available for alloy oxidation, keeps the nozzle hot and produces a gas of lower density than air to impinge on the melt puddle.

In addition it has been found that the presence of the scraper and side shields markedly improves the

4

effectiveness of the CO flame. Without the scraper, the CO tends to burn downstream of the nozzle only, with the result that if ribbon is formed at all it is thin and full of holes, indicating poor melt/substrate contact. With a scraper the flame burns upstream of the nozzle and of the gas inlet tube, indicating the effectiveness of the scraper in removing the air boundary layer and, therefore, creating a low pressure area behind it which is filled by the protective gas. Without side shields, however, extraneous wind currents generated by the moving substrate assembly, can distort the gas flow so that it does not uniformly impinge upon the nozzle and melt puddle. Under these conditions, the ribbon is apt to be formed non-uniformly. In particular, one or both ribbon edges tend to be irregular. It has been found, however, that when side shields are used in conjunction with the scraper blade and protective gas, the gas flow pattern is uniform and consistent and ribbon can be cast reliably.

The precise dimensions and location of the scraping means, gas supply and shielding means are not critical, but it has been found that several general concepts should be adhered to. The scraping means, gas supply and shielding portions of the casting apparatus, that is, the side shields, scraper blade, and gas inlet tube should be located to ensure that a uniform gas flow pattern is maintained. In general, the opening of the gas inlet tube should be located within 2 to 4 inches of the nozzle. The scraper should be positioned as close as is practical to the gas inlet tube to ensure that the protective gas flows into the low pressure area behind it and not the ambient atmosphere. The side shields should be located so that they extend from the scraper to a point roughly 2 to 3 inches past the nozzle slot. The shields should be of a height such that they are close to or in contact with the substrate assembly at the bottom and the underside of the nozzle or nozzle support at the top. The nozzle or nozzle support should be such that when it is in the casting position, the scraper, the side shields and the underside of the nozzle support form a semi-enclosed chamber around the nozzle slot which maximizes the effect of the inert or protective gas, as shown in Figs. 2 and 3.

The alloys cast according to this invention are rapidly solidified ribbons which cool at a rate in excess of $10^5$°C/sec. This process produces material suitable for use as brazing foil in the as-cast condition with lower oxygen content and a smaller silicon particle size than is possible in aluminum brazing foils produced by other techniques and is suitable for alloy compositions which are highly desirable for brazing but that cannot be made into foils by other techniques.

The following examples are presented in order to provide a more complete understanding of the invention. The specific techniques, conditions, materials and reported data set forth to illustrate the invention are exemplary and should not be construed as limiting the scope of the invention.

Examples 1—9 and Comparative Example

Ribbons were cast in accordance with the procedure described above by using an over pressure of argon to force molten aluminum alloy through slotted nozzle onto a water cooled copper alloy wheel rotated to produce surface speeds of between about 900 m/min and 1500 m/min. Ribbons are 2.5 cm wide and vary from about 25 to 85 μm thick.

The nominal compositions of the alloys based on the charge weight added to the melt are summarized in Table 1. The liquidus and solidus temperatures were determined by differential thermal analysis and are listed in Table 1. As a simple measure of ductility, samples of the ribbon were bent between the piston and the anvil of a micrometer until they cracked. The bend radius as determined from the micrometer reading when the crack occurred is listed in Table 1. The smaller the bend radius the more ductile is the ribbon.

As shown in Table 1, alloys of this invention with high silicon contents and therefore low liquidus and solidus temperatures and high magnesium contents which is desirable in fluxless brazing processes have been cast into thin foils that can be easily handled and formed as brazing preforms, as indicated by the small minimum bend radius.

EP 0 145 933 B1

TABLE 1

Composition, solidus and liquidus temperatures, and minimum bend radius of as-cast 2.5 cm wide ribbons

| Example | Alloy composition (wt. %) | | | | Solidus temperature (°C) | Liquidus temperature (°C) | Minimum bend radius (cm) |
| --- | --- | --- | --- | --- | --- | --- | --- |
| | Al | Si | Mg | Others | | | |
| 1 | 88.0 | 10.0 | 2.0 | — | 552 | 606 | 0.11 |
| 2 | 88.5 | 11.0 | 1.5 | — | 549 | 600 | 0.05 |
| 3 | 85.0 | 11.0 | 1.0 | 3.0Cu | 503 | 590 | 0.08 |
| 4 | 86.0 | 12.0 | 2.0 | — | 548 | 605 | 0.08 |
| 5 | 85.0 | 12.0 | 3.0 | — | 544 | 606 | 0.16 |
| 6 | 86.96 | 12.0 | 1.0 | 0.04-Bi | 551 | 601 | 0.10 |
| 7 | 85.97 | 13.0 | — | — | 547 | 600 | 0.04 |
| 8 | 85.0 | 12.0 | 2.0 | 1-R.E. | 544 | 600 | 0.16 |
| 9 | 85.0 | 13.0 | 2.0 | — | 548 | 602 | 0.08 |
| Comp. Ex. | 90.0 | 9.5 | 0.5 | — | 559 | 617 | 0.01 |

(Commercial alloy 4004)

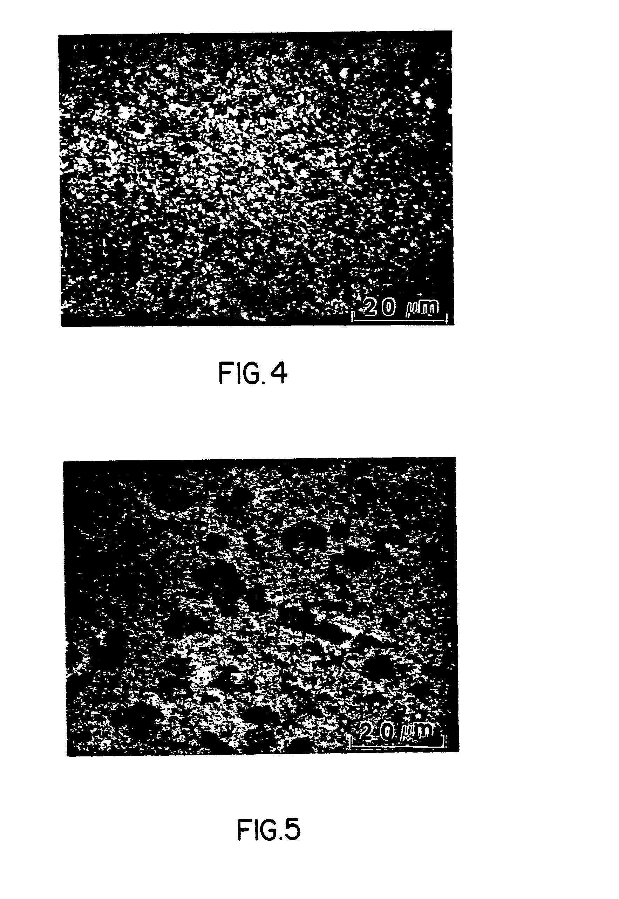

Some of the ribbon samples were cut, mounted, polished and etched using standard metallographic techniques for examination of the microstructure by optical microscopy. Fig. 4 is a micrograph of a representative sample having the composition 85 wt. % Al, 13 wt. % Si and 2 wt. % Mg. The structure is of a very fine scale typical of these alloys solidified at greater than $10^5$°C/sec. The silicon particle size is so small that individual silicon particles cannot be distinguished at magnifications associated with optical microscopy. Transmission electron microscopy examination showed the silicon particles to be less than 0.002 µm.

For comparative purposes a sample of a commercially available aluminum brazing foil designated as alloy 4004 and containing 9.5 wt. % Si and 0.5 wt. % Mg with the balance being Al was prepared in the same manner. Fig. 5 is a micrograph of a cross section of that sample. It exhibits a microstructure characteristic of a foil prepared by a succession of rolling and annealing treatments. In particular it contains distinct silicon particles with an average size of about 2.5 µm.

Examples 10 and 11 and Comparative Example

The oxide film thickness of two of the foils of the present invention and of a commercially available foil produced with conventional methods was determined using combinations of Auger Electron Spectroscopy (AES) in conjunction with inert gas sputtering and Electron Spectroscopy for Chemical Analysis (ESCA). Both these techniques are commonly used for surface analysis, the AES/inert gas sputtering being destructive whereas ESCA gives non-destructively, in-depth composition information. The nominal alloy compositions and the oxide film thickness are listed in Table 2.

TABLE 2

Brazing foil composition and oxide film thickness as determined by AES/ESCA analysis

| Example | Alloy composition (wt. %) | | | Oxide film thickness (µm) |
| --- | --- | --- | --- | --- |
| | Al | Si | Mg | |
| 10 | 87.5 | 11.0 | 1.5 | 0.0075 |
| 11 | 85.0 | 13.0 | 2.0 | 0.0075 |
| Comp. Ex. | 90.0 | 9.5 | 0.5 | 0.015 |

(Commercial alloy 4004)

6

## Example 12 and Comparative Example

Lap shear test specimens were prepared according to AWS C 3.2 "Standard Method for Evaluating the Strength of Brazed Joints". Aluminum sheet (commercially designation 1100), 3.175 mm (0.125") thick was used as the base metal. Ribbons of selected compositions having dimensions of about 25 µm to 85 µm thick and about 25.4 mm (1") wide were used as the filler metal. Brazed joints were of the lap type with lap dimension carefully controlled to 6.35 mm (0.25"). Prior to brazing, the aluminum metal was cleaned in the following manner: degreased in acetone, chemically etched for 45—60 seconds in 10% $HNO_3$+1% HF solution followed by rinsing in water and alcohol and then drying in air. However, the filler metal was used as-cast without any treatment. Lap joints containing selected brazing ribbons of the invention were then assembled by laying ribbons side by side to cover the entire length of the lap joint. Specimens were then clamped and heated to the brazing temperature inside a vacuum furnace.

For comparative purposes identical joints were prepared using 100 µm thick commercial 4004 foil. In this case no brazed joint could be prepared without first removing the oxide layer from the brazing foil by severe pickling in acid solution. On the other hand the brazing foils of the present invention did not require any prior treatment. This emphasizes the importance of the thin oxide layer observed (Table 2) in foils of the present invention.

The compositions of the brazing foil, brazing temperature and mechanical properties of brazed joints having an overlap of 12.7 mm (0.5") are listed in Table 3. All brazing was done in a vacuum of $2.7 \times 10^{-3}$ Pa ($2 \times 10^{-5}$ Torr) for 2 mins at 630°C.

TABLE 3

Composition, brazing temperature and mechanical properties of the brazed joints

| Example | Alloy composition (weight %) | | | | Shear strength MPa (ksi) | Tensile strength (MPa) | Area of failure |
|---------|------|------|-----|------|-----------|-----------|-----------|
| | Al | Si | Mg | Bi | | | |
| 12 | 86.96 | 12.0 | 1.0 | 0.04 | 45 (6.48) | 90 (12.96) | Base metal |
| Comp. Ex. | 90.0 | 9.5 | 0.5 | — | 44 (6.32) | 87 (12.64) | Base metal |
| | (Commercial alloy 4004) | | | | | | |

## Claims

1. Apparatus for fabricating a continuous metal foil composed of a low density, readily oxidizable aluminum based alloy comprising a slotted nozzle (21), a moving chill substrate (1, 14, 23) and a gas supply means (8, 11, 20), characterized in that there are provided scraping means (7, 12, 19) located upstream of said slotted nozzle (21) and being adapted to ride on said substrate (1, 14, 23) and remove the gaseous boundary layer associated therewith, and shielding means (13, 18) located proximate to said nozzle and configured to form a semi-enclosed chamber around said nozzle (21) and said substrate (1, 14, 23), said chamber having a bottom wall comprising said substrate, a top wall comprising said nozzle, side walls comprising a plurality of side shields and a back wall comprising said scraping means, said shielding means being operative to direct and confine a replacement gas in the vicinity of said nozzle, and that the gas supply means (8, 11, 20) are disposed between said scraping means (7, 12, 19) and said nozzle (21) for introducing the replacement gas behind said nozzle so that said replacement gas rides on and is carried with said substrate to said nozzle.

2. A foil of an alloy containing about 10 to 13 weight percent Si, up to 3 weight percent Mg, up to 4 weight percent Cu, up to 0.2 weight percent of at least one element selected from the group consisting of Bi, P, Sr, Li, Sc, Y, Na and Ca, up to 2 weight percent of at least one of the rare earth elements, the balance being aluminum and incidental impurities, characterized in that the average silicon particle size is less than 1 µm obtained by quenching a melt of said alloy at a rate of at least $10^{5}$°C/sec.

3. A foil according to claim 2, said foil containing 12 to 13 weight percent Si, 0.5 to 2.5 weight percent Mg and up to 0.05 weight percent of at least one of the elements Bi and Sr.

4. A foil according to claim 2, said foil being ductile.

5. A foil according to claim 2, said foil having a thickness ranging from about 25 µm to 100 µm.

6. A foil according to claim 2, said foil having a surface oxide film of thickness less than 0.01 µm.

7. Use of a foil according to one of the claims 2 to 6 for joining together two or more metal parts by interposing said foil between the metal parts to form an assembly, said foil having a melting point less than that of any of the parts, heating the assembly in vacuum to at least the melting temperature of the foil and cooling the assembly.

## Patentansprüche

1. Vorrichtung zur Herstellung einer zusammenhängenden Metallfolie aus einer leicht oxidierbaren Legierung auf Aluminiumbasis mit niedriger Dichte mit einer Schlitzdüse (21), einem sich bewegenden Kühlsubstrat (1, 14, 23) und einer Gaszufuhreinrichtung (8, 11, 20), dadurch gekennzeichnet, daß Schabeeinrichtungen (7, 12, 19), die aufstromwärts von der Schlitzdüse (21) angeordnet sind und so ausgebildet sind, daß sie auf dem Substrat (1, 14, 23) gleiten und die mit ihm verbundene gasförmige Grenzschicht entfernen, und Abschirmeinrichtungen (13, 18), die unmittelbar an der Düse angeordnet und so gestaltet sind, daß sie eine halbgeschlossene Kammer um die Düse (21) und das Substrat (1, 14, 23) herum bilden, vorgesehen sind, wobei die Kammer eine das Substrat umfassende Bodenwand, eine die Düse umfassende obere Wand, merhere Seitenabschirmungen umfassende Seitenwände und eine die Schabeeinrichtungen umfassende Rückwand hat und die Abschirmeinrichtungen so arbeiten, daß sie ein Ersatzgas in die Nähe der Düse richten und dort begrenzen, und daß die Gaszufuhreinrichtungen (8, 11, 20) zwischen den Schabeeinrichtungen (7, 12, 19) und der Düse (21) zur Einführung des Ersatzgases hinter der Düse derart, daß das Ersatzgas auf dem Substrat zu der Düse mitgeführt und getragen wird, angeordnet sind.

2. Folie einer Legierung, die etwa 10 bis 13 Gew.-% Si, bis zu 3 Gew.-% Mg, bis zu 4 Gew.-% Cu, bis zu 0,2 Gew.-% wenigstens eines Elementes aus der Gruppe Bi, P, Sr, Li, Sc, Y, Na und Ca, bis zu 2 Gew.-% wenigstens eines der Seltenen Erdelemente und als Rest Aluminium und gelegentliche Verunreinigungen enthält, dadurch gekennzeichnet, daß die mittlere Siliciumteilchengröße kleiner als 1 µm ist und durch Abschrecken einer Schmelze der Legierung mit einer Geschwindigkeit von wenigstens $10^5$°C/sec erhalten wurde.

3. Folie nach Anspruch 2, wobei die Folie 12 bis 13 Gew.-% Si, 0,5 bis 2.5 Gew.-% Mg und bis zu 0,05 Gew.-% wenigstens eines der Elemente Bi und Sr enthält.

4. Folie nach Anspruch 2, wobei die Folie duktil ist.

5. Folie nach Anspruch 2, wobei die Folie eine Dicke im Bereich von etwa 25 µm bis 100 µm hat.

6. Folie nach Anspruch 2, wobei die Folie einen Oberflächenoxidfilm einer Dicke geringer als 0.01 µm hat.

7. Verwendung einer Folie nach einem der Ansprüche 2 bis 6 zur Verbindung zweier oder mehrerer Metallteile miteinander durch Zwischenlegen der Folie zwischen die Metallteile unter Bildung einer Anordnung, wobei die Folie einen Schmelzpunkt geringer als jedes der Teile hat, Erhitzen der Anordnung im Vakuum auf wenigstens die Schmelztemperatur der Folie und Abkühlen der Anordnung.

## Revendications

1. Dispositif pour la fabrication d'un clinquant métallique continu constitué d'un alliage à base d'aluminium de faible densité, oxydable facilement, comprenant une buse fendue (21), à substrat mobile de refroidissement (1, 14, 23) et un moyen d'alimentation en gaz (8, 11, 20), caractérisé en ce qu'on a prévu un moyen de grattage (7, 12, 19) situé en amont de la buse fendue (21) et destiné à se déplacer sur le substrat (1, 14, 23) et enlever la couche limite gazeuse associée à celui-ci, et un moyen de protection (13, 18) placé à proximité de la buse et configuré de manière à former une chambre semi-fermée autour de la buse (21) et du substrat (1, 14, 23), la chambre comportant une paroi inférieure comprenant le substrat, une paroi supérieure comprenant la buse, des parois latérales comprenant une multitude d'écrans latéraux et une paroi arrière comprenant le moyen de grattage, le moyen de protection étant mis en oeuvre pour diriger et confiner un gaz de remplacement dans le voisinage de la buse, et en ce que le moyen d'alimentation en gaz (8, 11, 20) est disposé entre le moyen de grattage (7, 12, 19) et la buse (21) afin d'introduire le gaz de remplacement à l'arrière de la buse pour que ce gaz de remplacement se déplace sur le substrat et soit acheminé avec celui-ci jusqu'à la buse.

2. Clinquant en alliage contenant environ 10 à 13% en poids de Si, jusqu'à 3% en poids de Mg, jusqu'à 4% en poids de Cu, jusqu'à 0,2% en poids d'au moins un élément choisi dans le groupe constitué de Bi, P, Sr, Li, Sc, Y, Na et Ca, jusqu'à 2% en poids d'au moins l'un des éléments des terres rares, le reste étant de l'aluminium et les impuretés accidentelles, caractérisé en ce que le diamètre moyen des particules de silicium est inférieur à 1 µm obtenu par refroidissement d'une masse fondue de l'alliage à une cadence d'au moins $10^5$°C/s.

3. Clinquant selon la revendication 2, le clinquant contenant 12 à 13% en poids de Si, de 0,5 à 2,5% en poids de Mg et jusqu'à 0,05% en poids d'au moins l'un des éléments Bi et Sr.

4. Clinquant selon la revendication 2, le clinquant étant ductile.

5. Clinquant selon la revendication 2, le clinquant ayant une épaisseur comprise entre environ 25 µm et 100 µm.

6. Clinquant selon la revendication 2, le clinquant comportant une pellicule d'oxyde en surface ayant une épaisseur inférieure à 0,01 µm.

7. Utilisation d'un clinquant selon l'une des revendications 2 à 6 pour réunir ensemble deux ou plusieurs parties métalliques par interposition du clinquant entre les parties métalliques afin de former un ensemble, le clinquant ayant un point de fusion inférieur à celui de l'une des parties, par chauffage de l'ensemble sous vide à au moins la température de fusion du clinquant et par refroidissement de l'ensemble.

FIG. I

FIG. 2

FIG. 3

FIG. 4

FIG. 5